# EUROPEAN PATENT APPLICATION

(11) **EP 1 178 684 A2**
(43) Date of publication of application: **06.02.2002**
(21) Application number: 01118618.6
(22) Date of filing: 02.08.2001
(51) Int. Cl.: H04N 7/16

(54) **Server based broadcast system, apparatus and method and recording medium and software program relating to this system**

(30) Priority: 03.08.2000 JP 2000235934; 03.08.2000 JP 2000235935
(71) Applicant: MATSUSHITA ELECTRIC INDUSTRIAL CO., LTD., Kadoma-shi, Osaka 571-8501 (JP)
(72) Inventor: Machida, Kazuhiro, Inzai-shi, Chiba-ken 270-1356 (JP); Arai, Yuko, Tokyo 144-0034 (JP); Nishi, Hiroyuki, Tokyo 168-0065 (JP)
(74) Representative: Manitz, Finsterwald & Partner GbR

(57) **Abstract**

A server based broadcast system has a receiver (200) capable of automatically storing broadcasted contents (A, B, C, D, E; D32, D33, D38, D42, D49) and allowing a user to enjoy playback of an intended service element involved in the stored contents. Information necessary to operate this server based broadcast system, such as service component information and renewal schedule, is transmitted as a meta-content equivalent to a content composing the substance of this server based broadcast service. Content information, including private information inherent to each content (admi. ID, version, filtering pattern, expiration etc.) as well as common information applicable to a plurality of contents (service type, service ID, provider ID, compulsory contents, time limit, etc.), is added to each content to be broadcasted and carried on a carousel for data broadcasting. A receiver makes a content group with reference to the common information.

## Description

### BACKGROUND OF THE INVENTION

The present invention relates to a server based broadcast system capable of storing broadcasted contents and allowing a user to arbitrarily reproduce an intended content among the stored contents. Especially, the present invention realizes a mechanism or scheme for providing a variety of server based broadcast services.

In Japan, the BS digital broadcasting service has started at the end of the year 2000, and the digital terrestrial broadcasting service will be available in the three major metropolitan areas by the end of the year 2003. The digital broadcasting is characterized by highly advanced functions and related advanced features, including high picture quality realized by digital high vision images, multiple channels, and data broadcasting.

The data broadcasting enables TV broadcasters to provide various information, such as news, traffic information, weather forecast, and sports information. Furthermore, a server based broadcast system is already developed to automatically store broadcasted contents in a memory of a receiver and to allow each user to select an arbitrary content from the stored contents and display the selected content on a TV screen. Accordingly, each user can obtain intended information on any occasion.

Under such circumstances, it is supposed that the number of information providers providing such server based broadcast services will increase in the future. Thus, each user can select a favorable information provider to enjoy a server based broadcast service according to user's preference.

However, according to the above-described conventional server based broadcast system, the capability of data broadcasting is limited to solely indicating the broadcasted contents having been stored until the time a user wants to play or reproduce. In other words, the conventional server based broadcast system has no intent to correlate the broadcasted contents with each other.

For example, it is assumed that advertisement information of an automobile sales company consists of a plurality of contents, such as catalog information of car type A, catalog information of car type B, and price information covering both of the car types A and B. If these contents are provided to a user at a time, the user will be able to watch the catalog of car type A or watch the catalog of car type B, or compare their prices according to his/her preference. However, the conventional server based broadcast system is dissatisfactory in that only the catalog of car type A will be provided to a user if the catalog of car type B and the price information are not stored yet. And, only the catalogs of car types A and B will be provided to a user if the price information is not stored yet.

In view of the above, if a plurality of contents are correlated each other and classified into groups, presentation of the stored information will become more flexible. For example, the contents in each group can be displayed successively or displayed according to an arbitrary combination designated by a user. As a result, services provided in this manner will become attractive to users.

However, it is not predictable when each user wants to enjoy playback of the stored contents. Thus, even if intended to present a plurality of linked contents, it is not guaranteed that all of these contents are already stored when a user intends to play or reproduce. Thus, according to the conventional server based broadcast system, no idea will arise for letting the contents correlate with each other. Hence, in many cases, producers of these contents (i.e., information providers) are working on the assumption that each content is presented as an independent item non-related to other contents.

### SUMMARY OF THE INVENTION

In view of the foregoing problems, the present invention has an object to provide a useful server based broadcast system capable of grouping the broadcasted contents in an intended manner as well as providing a mechanism for enabling the server based broadcast services to spread widely.

To accomplish the above and other related objects, the present invention provides a server based broadcast system comprising a receiver capable of automatically storing broadcasted contents and allowing a user to enjoy playback of an intended service element involved in the stored contents. Especially, information necessary to operate the server based broadcast system is transmitted as a meta-content equivalent to a content composing the substance of the server based broadcast service.

Therefore, the present invention makes it possible to effectively realize a push-type information broadcast system by transmitting a meta-content including the information necessary to operate the server based broadcast system in the same manner as a content of service information.

Furthermore, to accomplish the above and other related objects, the present invention provides a server based broadcast system comprising a receiver capable of automatically storing broadcasted contents and allowing a user to enjoy playback of an intended item involved in the stored contents. Especially, a meta-data is added to each content to be broadcasted. The meta-data comprises private information inherent to each content as well as common information applicable to a plurality of contents. Meanwhile, the receiver makes a group of contents having the same common information involved in the meta-data attach thereto.

Therefore, the present invention makes it possible to provide a server based broadcast system which supplies rich and flexible contents attractive for the users of this system.

More specifically, the present invention provides a first server based broadcast system for transmitting and receiving a data via a transmission path. The first server based broadcast system comprises a data transmitting device and a receiving terminal which are arranged in the following manner.

In the data transmitting device, a content storing section stores and administrates contents to be transmitted. A content correlation processing section correlates the contents with each other based on a user's instruction. A content appendix information generating section, communicating with the content correlation processing section, generates private content information as appendix information inherent to each content as well as common content information as appendix information common to a plurality of contents. And, a content meta-data generating section produces a meta-data relating to a content based on the private content information and the common content information produced by the content appendix information generating section.

In the receiving terminal, a common content information extracting section receives the content meta-data produced from the data transmitting device and extracts the common content information involved in the received content meta-data. A content grouping section makes a content group consisting of a plurality of contents received from the data transmitting device according to the common content information extracted by the common content information extracting section. And, a content administrating section stores and administrates the contents belonging to the same content group.

The present invention provides a second server based broadcast system differs from the above-described first server based broadcast system in that the content correlation processing section analyzes a correlation between the contents stored in the content storing section and performs related processing according to an analysis result.

Preferably, the common content information comprises compulsory information as a data required when the receiving terminal provides a content service to a user.

In relation to the above-described first and second server based broadcast systems, the present invention provides a data transmitting method for transmitting a data via a transmission path based on a server based broadcast system. The data transmitting method of the present invention comprises a step of storing and administrating contents to be transmitted when a data is transmitted; a step of analyzing a correlation between the contents; a step of performing related processing according to an analysis result; a step of generating private content information as appendix information inherent to each content as well as common content information as appendix information common to a plurality of contents; and a step of producing a content meta-data as a meta-data relating to a content based on the private content information and the common content information.

In relation to the above-described first and second server based broadcast system, the present invention provides a data receiving method for receiving a data via a transmission path based on a server based broadcast. The data receiving method of the present invention comprises a step of receiving the content meta-data when the data is received; a step of extracting the common content information involved in the received content meta-data; a step of making a content group consisting of a plurality of received contents according to the common content information; and a step of storing and administrating the contents belonging to the same content group.

The present invention provides a recording medium storing a software program for realizing the above-described data transmitting method as well as the above-described data receiving method.

The present invention provides a software program of a computer for realizing the above-described data transmitting method as well as the above-described data receiving method.

Furthermore, the present invention provides a third server based broadcast system comprising a receiver capable of automatically storing broadcasted contents and allowing a user to enjoy playback of an intended service element involved in the stored contents, characterized in that a meta-data is added to each content to be broadcasted, the meta-data comprising private information inherent to the each content as well as common information applicable to a plurality of contents, and the receiver makes a group of contents having the same common information involved in the meta-data attach thereto.

In the third server based broadcast system, it is preferable that the common information includes information designating all of the contents whose meta-data have the same common information. The common information includes information designating compulsory contents selected from the contents whose meta-data have the same common information, and playback of a group of stored contents is feasible only when the receiver has stored all of the compulsory contents. The private information includes information designating a receiver level, while the receiver checks the private information of a received content according to the meta-data attached thereto and stores the received content only when the private information of the received content designates its own receiver level. The meta-data is multiplexed with a content and carried on a carousel for data broadcasting. The receiver renews an already stored content by a newly received content when the private information of a meta-data attached to the newly received content has the same content identifying information as that of the already stored content. The common information includes an acquirement time limit of the compulsory contents, while the receiver cancels storing the contents whose meta-data have the same common information as that of the compulsory contents when fails to acquire all of the compulsory contents by the acquirement time limit. The common information or the private information includes expiration time information, while the receiver deletes a stored content when its expiration time has passed. The common information includes a filtering pattern, while the receiver checks the common information of the meta-data attached to a received content and stores the received content only when a filtering pattern of the received content agrees with a filtering pattern kept in the receiver. The meta-data includes digital sign information of a service provider, while the receiver checks the digital sign information of a received content and stores the received content only when the digital sign information represents an authenticated information provider.

Furthermore, the present invention provides a fourth server based broadcast system comprising a receiver capable of automatically storing broadcasted contents and allowing a user to enjoy playback of an intended service element involved in the stored contents, characterized in that information necessary to operate the server based broadcast system is transmitted as a meta-content equivalent to a content composing the substance of the server based broadcast service.

In the fourth server based broadcast system, it is preferable that the content and the meta-content are carried on a data carousel for data broadcasting. The meta-content is used to transmit service component information including information relating to the content as well as information relating to a hierarchical structure of a server based broadcast service provided by a service provider. The meta-content is used to transmit information relating to renewal of the content. Each of the content and the meta-content links with other content or meta-content to compose a content group. Each of the content and the meta-content composing the content group is presented only when a predetermined number of contents or meta-contents of the content group have been stored in the receiver. The receiver displays a screen inquiring whether or not a user utilizes a service, and the receiver controls reception of the content based on a service selected by the user. The receiver acquires information relating to a required storage capacity of information based on the service component information corresponding to the selected service, and secures the required storage capacity. The receiver acquires information relating to a public key based on the service component information corresponding to the selected service, and uses the public key for authentication. A meta-data is attached to the meta-content. The meta-data comprises private information inherent to the meta-content and common information applicable to a plurality of meta-contents composing the content group. The meta-data attached to the meta-content of the service component information includes the private information or the common information describing expiration time information. The meta-data attached to the meta-content of the service component information includes the private information describing filtering information.

In relation to the third server based broadcast system, the present invention provides a method for transmitting a data of a server based broadcast system, comprising the steps of producing a meta-data comprising private information inherent to the each content as well as common information applicable to a plurality of contents; and broadcasting the meta-data together contents composing a server based broadcast service. Meanwhile, the present invention provides a method for receiving a data of a server based broadcast system, comprising the steps of automatically storing broadcasted contents; and allowing a user to enjoy playback of an intended service element involved in the stored contents with reference to private information inherent to each content as well as common information applicable to a plurality of contents.

In relation to the fourth server based broadcast system, the present invention provides a method for transmitting a data of a server based broadcast system, comprising the steps of transmitting information necessary to operate the server based broadcast system as a meta-content equivalent to a content composing a substance of a server based broadcast service; and broadcasting the meta-content together with the content composing the substance of a server based broadcast service. Meanwhile, the present invention provides a method for receiving a data of a server based broadcast system, comprising the steps of automatically storing information necessary to operate the server based broadcast system as a meta-content equivalent to a content composing a substance of a server based broadcast service; and allowing a user to enjoy playback of an intended service element involved in the stored contents with reference to the , meta-content.

Furthermore, the present invention provides a receiver used for a server based broadcast system, comprising a receiving section for receiving broadcasted data; a storage administrating section for administrating the contents composing a server based broadcast service based on common content information and private content information attached to each content of the server based broadcast service; a receiving condition administrating section for administrating receiving conditions of each content of the server based broadcast service; a storage section for storing the contents of the server based broadcast service; and a selection and presenting section for selecting a content from the storage section and presenting a selected content.

Preferably, in this receiver, the receiving section receives a carousel having an information provider identification. The storage administrating section analyzes the common content information of each content received by the receiving section to confirm whether or not a service type is service component information. The common content information describes compulsory contents, and the private content information describes a content identifier of each compulsory content. The storage administrating section transmits the information of the compulsory contents as well as the content identifier of each compulsory content to the receiving condition administrating section when the service type of a received content is service component information. The storage administrating section causes a cache to temporarily store the compulsory contents. The receiving condition administrating section creates a compulsory content identifier list and a received content identifier list based on the common content information. The storage administrating section transfers the received contents from the cache to the storage section and informs the selection and presenting section of effectiveness or validity of service component information when all of the contents described in the compulsory content identifier list are registered as having been already received in the received content identifier list, and when all of the compulsory contents are stored in the cache. The selection and presenting section presents a list of element services of each information provider on its screen to allow a user to select a favorable element service. The storage administrating section causes the storage section to secure a storage area for storing the contents of selected element service based on service component information described in the common content information. The storage administrating section analyzes the common content information of each content of an information provider received by the receiving section to obtain a service identifier described in the common content information. The storage administrating section accesses the receiving condition administrating section to confirm the receiving conditions of a service identified by the service identifier. The common content information includes acquirement time limit of a service identified by the service identifier. Storage of the contents of the service is canceled when all of the compulsory contents are not stored by the acquirement time limit. The storage administrating section deletes already received contents from the cache and deletes corresponding service receiving conditions from the receiving condition administrating section when all of the compulsory contents are not stored by the acquirement time limit. Furthermore, a receiver's private information administrating section is provided for administrating level information of the receiver. The storage administrating section compares each receiver level contained in the private information of a received content with the level information of the receiver, and the received content is stored in the storage section only when any one of receiver levels contained in the private information agrees with the level information of the receiver.

### BRIEF DESCRIPTION OF THE DRAWINGS

The above and other objects, features and advantages of the present invention will become more apparent from the following detailed description which is to be read in conjunction with the accompanying drawings, in which:
Fig. 1 is a diagram showing the configuration of contents transmitted by a server based broadcast system in accordance with a preferred embodiment of the present invention;
Fig. 2 is a diagram showing a model of a server based broadcast service provided according to the server based broadcast system in accordance with the preferred embodiment of the present invention;
Fig. 3 is an example of service component information transmitted by the server based broadcast system in accordance with the preferred embodiment of the present invention;
Fig. 4 is an example of a renewal schedule transmitted by the server based broadcast system in accordance with the preferred embodiment of the present invention;
Fig. 5 is an example of common content information used in the server based broadcast system in accordance with the preferred embodiment of the present invention;
Fig. 6 is an example of private content information used in the server based broadcast system in accordance with the preferred embodiment of the present invention;
Fig. 7 is a diagram showing a carousel of a data content transmitted by the server based broadcast system in accordance with the preferred embodiment of the present invention;
Fig. 8 is a diagram showing a carousel of a program stream content transmitted by the server based broadcast system in accordance with the preferred embodiment of the present invention;
Fig. 9 is a diagram showing a carousel of service component information transmitted by the server based broadcast system in accordance with the preferred embodiment of the present invention;
Fig. 10 is a diagram showing a carousel of a renewal schedule transmitted by the server based broadcast system in accordance with the preferred embodiment of the present invention;
Figs. 11A and 11B are diagrams showing a relationship between compulsory contents and component contents transmitted by the server based broadcast system in accordance with the preferred embodiment of the present invention;
Fig. 12 is a block diagram showing an arrangement of a receiver of the server based broadcast system in accordance with the preferred embodiment of the present invention;
Fig. 13 is a block diagram showing an arrangement of a receiving condition administrating section of a receiver in accordance with the preferred embodiment of the present invention;
Figs. 14A and 14B are diagrams explaining a renewal of a content group in the server based broadcast system in accordance with the preferred embodiment of the present invention;
Fig. 14C is a diagram showing carousels of renewed contents in the server based broadcast system in accordance with the preferred embodiment of the present invention;
Figs. 15A and 15B are diagrams explaining a renewal of a server based broadcast service in a server based broadcast system in accordance with the preferred embodiment of the present invention;
Fig. 15C is a diagram showing a relationship between common content information and private content information in a server based broadcast system in accordance with the preferred embodiment of the present invention;
Fig. 16 is a block diagram showing an arrangement of a receiver in accordance with the preferred embodiment of the present invention;
Fig. 17 is a diagram showing a schematic arrangement of a server based broadcast system in accordance with the present invention;
Fig. 18A is a flowchart showing a data transmitting operation performed in a data transmitting device of the server based broadcast system in accordance with the present invention;
Fig. 18B is a flowchart showing a data receiving operation performed in a receiving terminal of the server based broadcast system in accordance with the present invention;
Fig. 19 is a diagram showing a parallel transmission of a server based broadcast service and an ordinary program in a server based broadcast system in accordance with a preferred embodiment of the present invention; and
Figs. 20A and 20B are diagrams showing menu screens used in a server based broadcast service provided by an information provider.

### DESCRIPTION OF PREFERRED EMBODIMENTS

Hereinafter, preferred embodiments of the present invention will be explained with reference to the attached drawings.

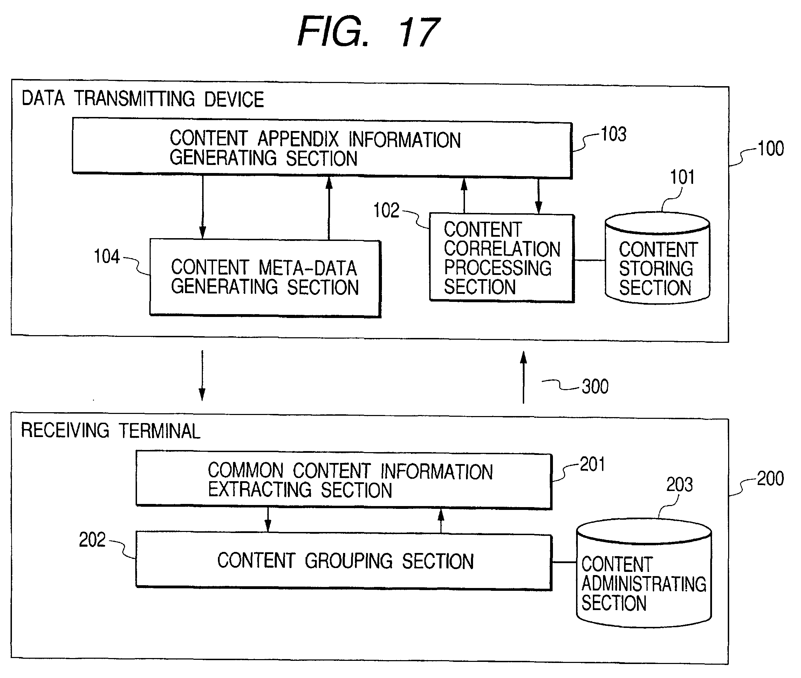

Fig. 17 is a diagram showing a schematic arrangement of a server based broadcast system in accordance with the present invention.

A server based broadcast system comprises a data transmitting device 100 and a receiving terminal 200 transmitting and receiving a data via a transmission path 300.

The data transmitting device 100 comprises a content storing section 101, a content correlation processing section 102, a content appendix information generating section 103, and a content meta-data generating section 104.

The content storing section 101 stores and administrates contents to be transmitted. The content correlation processing section 102 correlates the contents with each other based on a user's instruction or analyzes a correlation between the contents stored in the content storing section 101 to perform related processing according to an analysis result.

The content appendix information generating section 103, communicating with the content correlation processing section 102, generates private content information as appendix information inherent to each content as well as common content information as appendix information common to a plurality of contents.

The content meta-data generating section 104 produces a meta-data relating to a content based on the private content information and the common content information produced by the content appendix information generating section 103.

The receiving terminal 200 comprises a common content information extracting section 201, a content grouping section 202, and a content administrating section 203.

The common content information extracting section 201 receives the content meta-data produced from the data transmitting device 100 and extracts the common content information involved in the received content meta-data. The content grouping section 202 makes a content group consisting of a plurality of contents received from the data transmitting device 100 according to the common content information extracted by the common content information extracting section 201. The content administrating section 203 stores and administrates the contents composing the same content group.

The common content information comprises compulsory information as a data required when the receiving terminal provides a content service to a user.

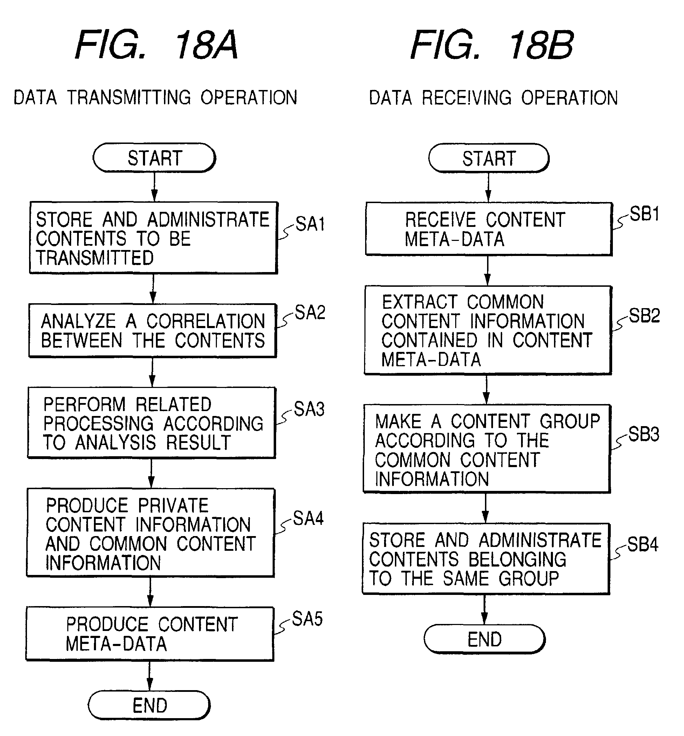

Fig. 18A is a flowchart showing a data transmitting operation performed in a data transmitting device 100 of this server based broadcast system in accordance with the present invention.

In step SA1, contents to be transmitted are stored and administrated.

In step SA2, a correlation between the contents is analyzed.

In step SA3, related processing is performed according to an analysis result.

In step SA4, private content information is produced as appendix information inherent to each content, and common content information is produced as appendix information common to a plurality of contents.

In step SA5, a content meta-data is produced as a meta-data relating to a content based on the private content information and the common content information.

Fig. 18B is a flowchart showing a data receiving operation performed in a receiving terminal 200 of this server based broadcast system in accordance with the present invention.

In step SB1, the content meta-data is received.

In step SB2, the common content information involved in the received content meta-data is extracted.

In step SB3, a content group consisting of a plurality of received contents is made according to the common content information.

In step SB4, the contents belonging to the same content group are stored and administrated.

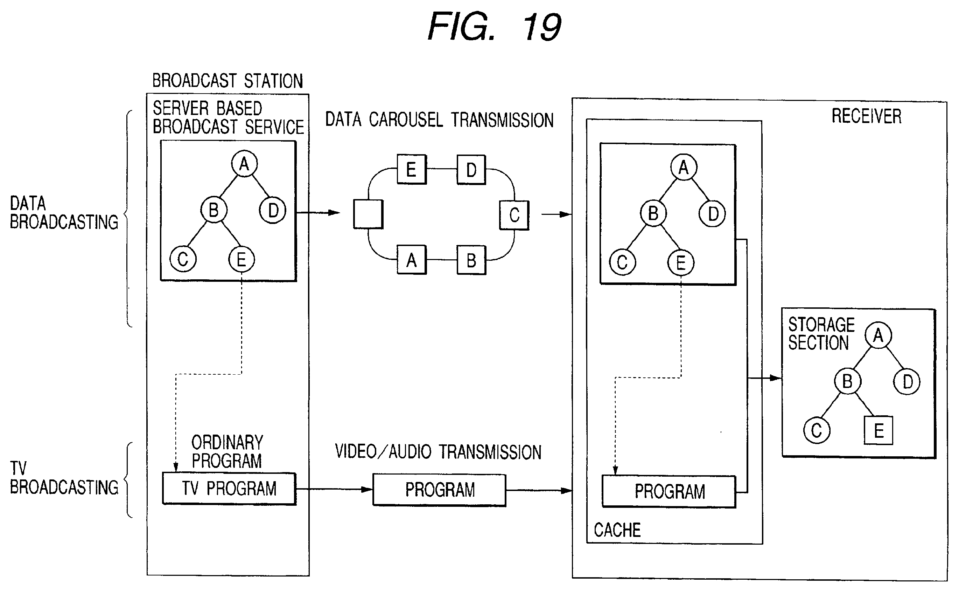

Fig. 19 shows a practical arrangement of a server based broadcast system in accordance with a preferable embodiment of the present invention, which is characterized by a parallel data transmission and reception of server based broadcast services and TV programs performed between a broadcast station and a receiver.

The broadcast station, serving as the data transmitting device 100 of the present invention, is a computer based data transmitting facility whose data transmission is controlled according to a software program installable in a preferable recording medium.

The broadcast station transmits the contents of a server based broadcast service in parallel with an ordinary TV program. The broadcast station transmits a TV program according to the video/audio transmission method. The contents of a server based broadcast service are multiplexed with the video/audio data of a TV program and repetitively transmitted according to a data carousel transmission method. When the content of a server based broadcast service is a program stream content, its program stream data designates a motion picture of a specific time slot (i.e., part) of this program.

In this respect, the broadcast station of this embodiment provides a software program of a computer based data transmitting facility. As explained in Fig. 18A, the software program for the data transmission comprises a step of storing and administrating contents to be transmitted when a data is transmitted, a step of analyzing a correlation between the contents a step of performing related processing according to an analysis result, a step of generating private content information as appendix information inherent to each content as well as common content information as appendix information common to a plurality of contents, and a step of producing a content meta-data as a meta-data relating to a content based on the private content information and the common content information.

Furthermore, the broadcast station of this embodiment provides a recording medium storing the above-described software program used for a data transmission in a server based broadcast system. For example, various types of recording or storage media conventionally used or available in the broadcast stations are used for storing the software program of this embodiment.

The receiver, serving as the receiving terminal 200 of the present invention, is a computer based receiving device whose data receiving operation is controlled according to a software program (generally referred to as firmware or microprogram) installable in a preferable recording medium.

The receiver has a cache for temporarily receiving the contents of a server based broadcast service and a TV program which are transmitted from the broadcast station. Furthermore, the receiver has a storing section for storing the contents of a server based broadcast service and a motion picture corresponding to a designated time slot.

In this respect, the receiving terminal of this embodiment provides a software program of a computer based data receiving device. As explained in Fig. 18B, the software program comprises a step of receiving a content meta-data when a data is received, a step of extracting common content information involved in the received content meta-data, a step of making a content group consisting of a plurality of received contents according to the common content information, and a step of storing and administrating the contents belonging to the same content group.

Furthermore, the receiving terminal of this embodiment provides a recording medium storing the above-described software program used for a data reception in a server based broadcast system. For example, various types of recording or storage media conventionally used or available in the receivers are used for storing the software program of this embodiment.

According to a server based broadcast system in accordance with a preferred embodiment of the present invention, a broadcast station transmits the contents of a server based broadcast service produced by an information provider and a receiver stores the broadcasted contents. There are a plurality of information providers each providing characteristic server based broadcast services.

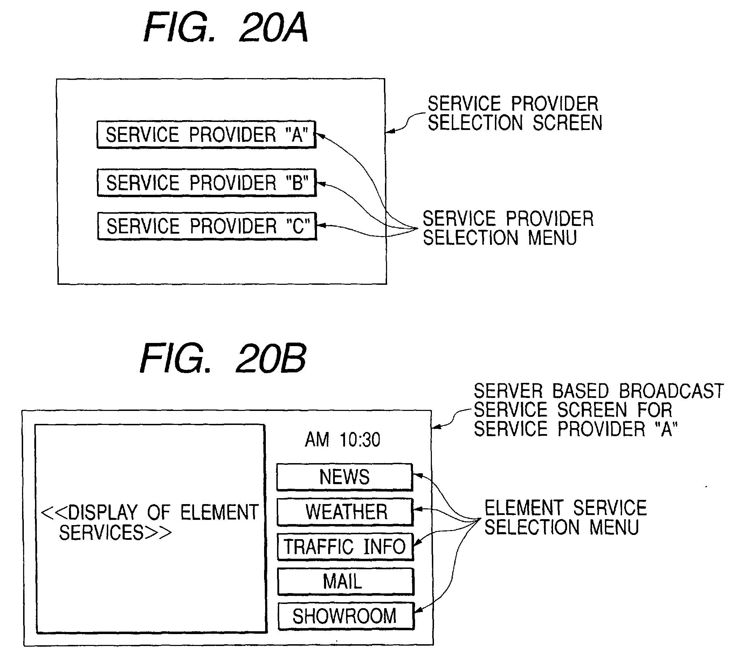

Figs. 20A and 20B show menu screens of a server based broadcast service provided by an information provider "A." A user, when selected this server based broadcast service, manipulates a remote controller with buttons to select a preferable item from various element services including "news", "weather forecast", "traffic information", "mail", "showroom" etc. (each element service is a unit of electronic newspaper, electronic catalog, showroom etc.), thereby displaying content information of a selected element service on a screen.

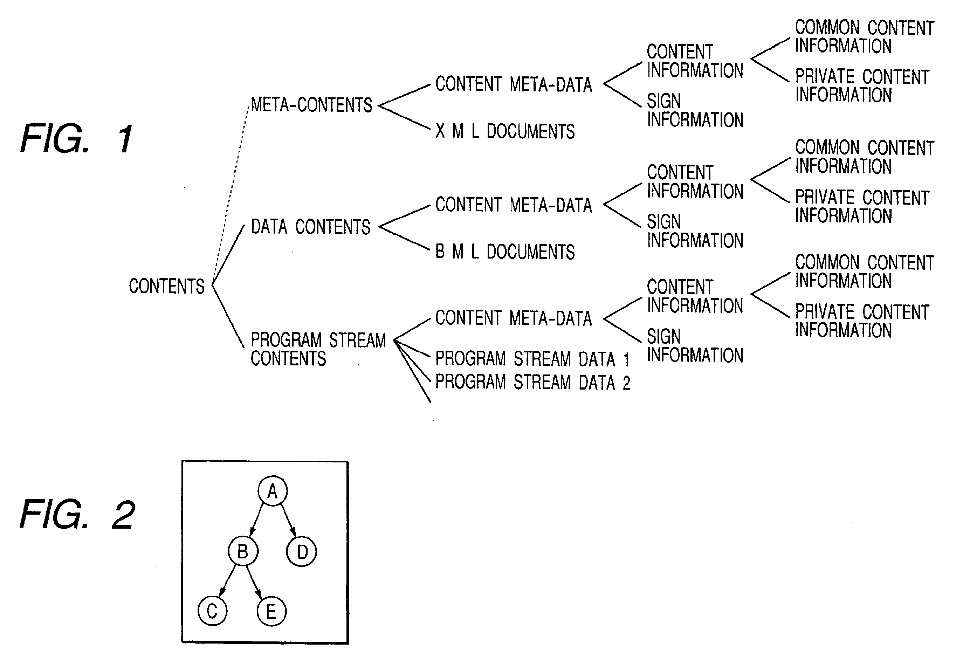

As shown in Fig. 2, some of these element services (e.g., "mail" and "showroom") consists of a plurality of contents, i.e., a group of five contents A, B, C, D and E. Only when the contents designated as compulsory among the group of contents A, B, C, D and E are already stored, the receiver can start playback of the stored contents. In Fig. 2, each arrow shows a relationship (i.e., linkage) between the contents to be presented during the playback. Namely, after the content A is presented, either the content B or the content D is presented according to the preference of a user. Then, if the content B is selected, either the content C or the content E is presented according to the preference of a user.

As shown in Fig. 1, the contents as substantial information of a server based broadcast service are chiefly classified into data contents and program stream contents. A data content consists of one or plural document data (containing a still picture referred to by a BML file) described by broadcasting markup language (BML) and a content meta-data indicating the attribute of a content. The content meta-data comprises content information and sign information. The content information is classified into common content information and private content information. The common content information indicates the attribute of a content group to which each content belongs to. The private content information indicates the attribute of each content. The sign information, indicating an information provider of each content, is used for authentication of a received content.

A program stream content comprises a content meta-data and at least one program stream data. Each program stream data is video and audio stream formatted data composing a broadcasting program dissected in time schedule and is expressed by program segmenting information describing the position in a time table of programs to be broadcasted in the same time slot.

Furthermore, there are meta-contents which are different from program stream contents or data contents in including no substantial data of element service but are regarded as being equivalent to these contents in the coding or transmission.

Some of the meta-contents include service information representing the configuration or component of an element service of each information provider. Another meta-contents include renewal schedule information representing broadcast delivery time and place of a content. A meta-content includes extensible markup language (XML) document data and content meta-data. The content meta-data comprises content information which is classified into common content information and private content information. A meta-content, when including renewal schedule information, comprises sign information in its content meta-data. However, a meta-content, when including the service component information, comprises no sign information.

These contents and meta-contents are transmitted repetitively based on a data carousel transmission method defined according to a standard "ARIB STD-B24" of ARIB (i.e., Association of Radio Industries and Businesses). One carousel transmits or carries one content (or meta-content).

In the following description, the content is explained as comprising a meta-content.

The service component information includes information relating to element service of an information provider, information relating to a content group composing an element service, and information relating to administration of a storage area of a receiver storing the contents of this content group.

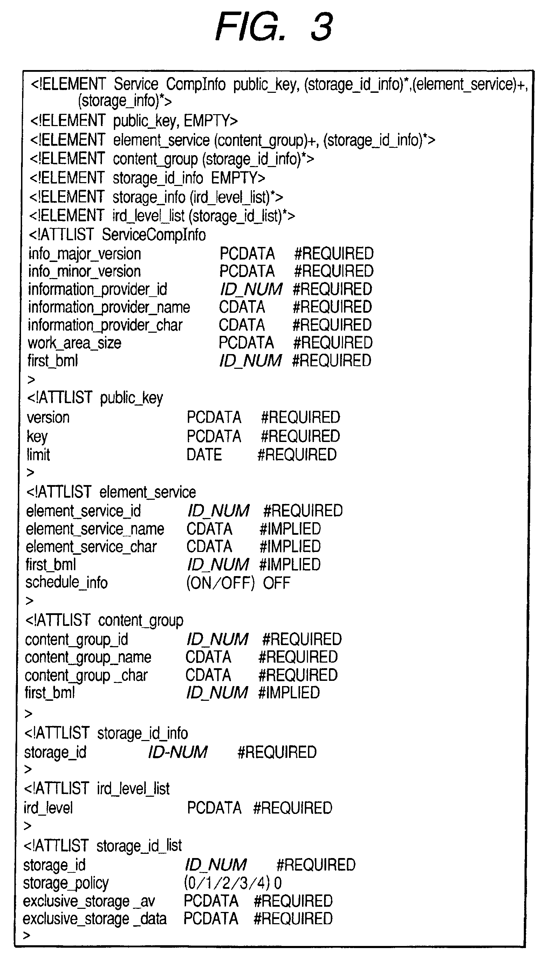

Fig. 3 shows an example of service component information. Each item shown in Fig. 3 has the following meaning.

ServiceCompInfo (service component information): information of service component;
info_major_version (major version): major version of service component information, being set to the same value as that of content_major_version of a content meta-data attached to service component information;
info_minor_version (minor version): minor version of service component information, being set to the same value as that of content_minor_version of a content meta-data attached to service component information;
information_provider_id (information provider ID): identification of an information provider of a concerned service component information;
information_provider_name (information provider name): name of information provider;
information_provider_char (information provider character): explanation of information provider;
work_area_size (work area size): size of a work area to be secured by a receiver for a concerned information provider;
first_bml (entry content of information provider): administration and identification of an entry content of a concerned information provider;
public_key (public key information): information of public key;
version (version): version of a public key;
key (public key): public key of information provider indicated by information_provider_id;
limit (end of effective time); expiration of a public key indicated by key;
storage_id_info (area identification information): information required for identifying a storage area of a content of a concerned information provider;
storage_id (area identification): identification of a storage area of a content of a concerned information provider, the storage area being set to a unique value in an information provider;
element_service (element service information): information relating to element service;
element_service_id (element service ID): identification of an element service of an information provider indicated by information_provider_id, being set to a unique value in an information provider and set to "0" when a renewal schedule is transmitted;
element_sevice_name (element service name): name of an element service indicated by element_service_id;
element_service_char (element service character): explanation of element service indicated by element_service_id;
first_bml (entry content of element service): administration and identification of an entry content of a concerned element service;
schedule_info (renewal schedule operating flag): flag indicating whether or not a concerned element service operates renewal schedule, being set to OFF as a default value;
storage_id_info (area identification information): information required for identifying a storage area of a content of a concerned element service;
storage_id (area identification): identification of a storage area of a content of a concerned element service;
content_group (content group): information of content group;
content_group_id (content group ID): identification of a content group composing an element service indicated by element_service_id, being set to a unique value in an information provider;
content_group_name (content group name): name of a content group composing an element service indicated by element_service_id;
content_group_char (content group character): explanation of a content group composing an element service indicated by element_service_id;
first_bml (entry content of content group): administration and identification of an entry content of a concerned content group;
storage_id_info (area identification information): information required for identifying a storage area of a content of a concerned content group;
storage_id (area identification): identification of a storage area of a content of a concerned content group;
storage_info (exclusive storage area information): information of exclusive storage area;
ird_level_list (receiver level list): list of corresponding receiver levels;
ird_level (receiver level): level of corresponding receivers;
storage_id_list (area identification list): list for area identification;
storage_id (area identification): area discrimination in a receiver, being set to a unique value in an information provider;
storage_policy (storage policy): policy of storage, being set to 0 as a default value;
exclusive_storage_av (exclusive storage area of stream): size of an exclusive storage area required for stream data; and
exclusive_storage_data (exclusive storage area of file): size of an exclusive storage area required for file.

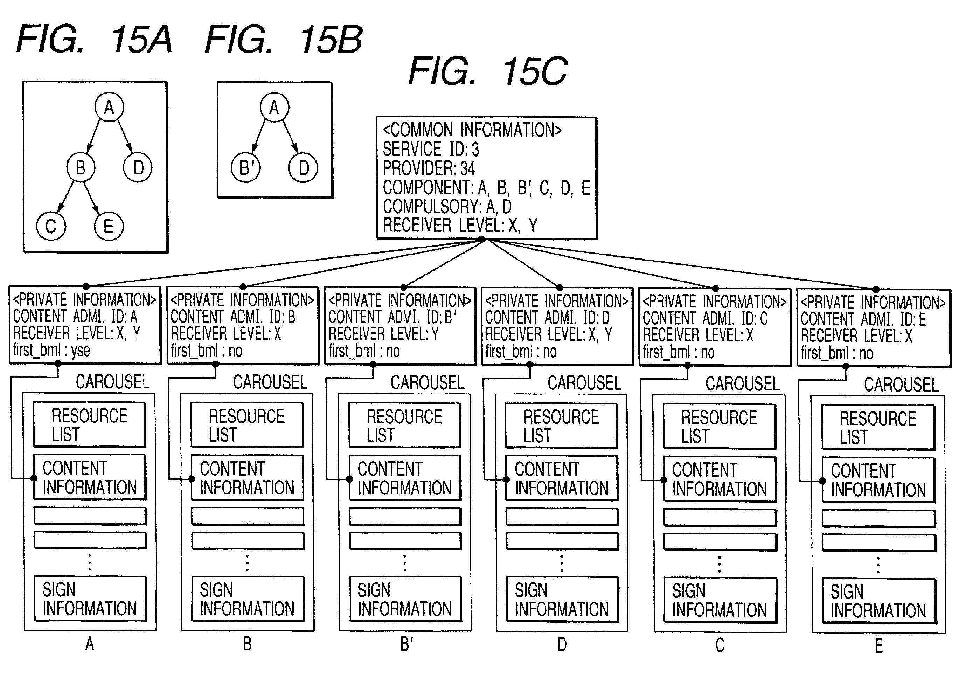

The receiver, successively receiving a carousel carrying service component information of each information provider, can obtain directory information of server based broadcast service of each information provider. The receiver presents a list of element services of each information provider on its screen according to a firmware (i.e., microprogram) incorporated in this receiver. When a user selects a preferable one of the presented element services, the receiver receives a corresponding carousel to store a content group composing an element service of a selected information provider. Fig. 15 shows a main menu displayed for playback of an element service of a selected information provider.

Meanwhile, the renewal schedule includes information relating to broadcast delivery time and place (transport and network) of a content.

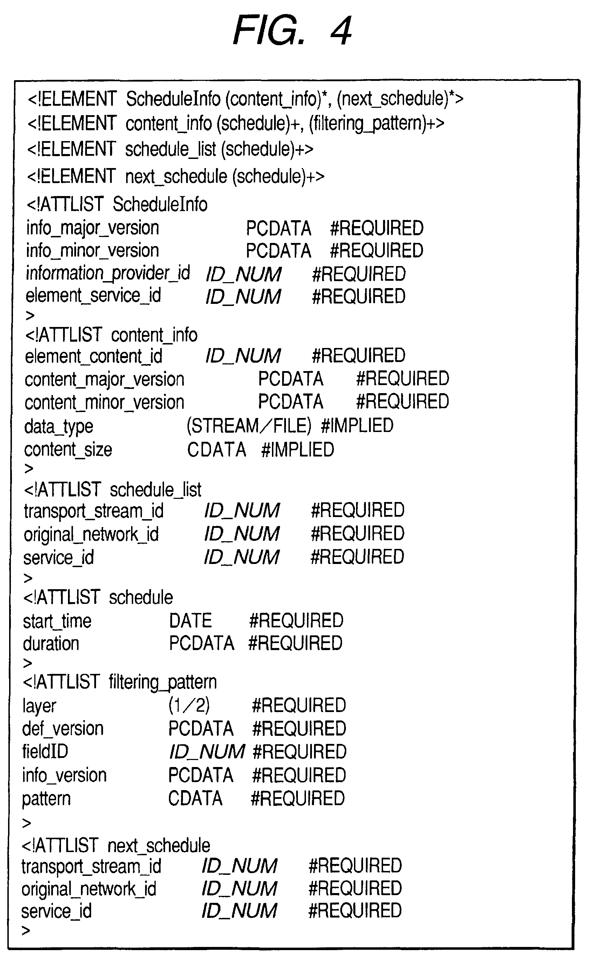

Fig. 4 shows an example of renewal schedule. Each item shown in Fig. 4 has the following meaning.

Schedule Info (renewal schedule): information of renewal;
info_major_version (major version): major version of renewal schedule, being set to the same value as that of content_major_version of a content meta-data attached to renewal schedule;
info_minor_version (minor version): minor version of renewal schedule, being set to the same value as that of content_minor_version of a content meta-data attached to renewal schedule;
information_provider_id (information provider ID): identification of an information provider of a concerned renewal schedule, being set to "0×00" for service component information;
element_service_id (element service ID): identification of an element service;
being set to a unique value in an information provider and set to "0" for a renewal schedule;
content_info (content information): information of content;
element_content_id (content administration ID): identification of content administration, being set to a unique value in an information provider;
content_major_version (content major version): major version of a content indicated by element_content_id;
content_minor_version (content minor version): minor version of a content indicated by element_content_id;
data-type (data type): data type of content (program stream content or data content);
content_size (content size): size of a content;
schedule_list (schedule list): list of schedule for transmitting a content;
transport_stream_id (transport identification): identification of a transport transmitting a content;
original_network_id (original network identification): identification of an original network transmitting a content;
service_id (service identification): identification of a service for transmitting a content;
schedule (schedule): schedule for transmitting contents;
start_time (start time): start time for transmitting a content;
duration (duration): duration for transmitting a content;
filtering_pattern (filtering pattern): filtering pattern attached to a concerned content, although not being described when no filtering is performed (i.e., when a concerned content is transmitted to all receivers);
filter_type (filtering information type): type of filtering information of a receiver to be matched with a filtering pattern;
def_version (definition version of filtering information): definition version to be matched with a filtering pattern in the type of filtering information of a receiver indicated by filter_type;
FieldID (field ID of filtering information): field ID to be matched with a filtering pattern in the type of filtering information of a receiver indicated by filter_type as well as in the definition version indicated by def_version;
info_version (setting version of filtering information): setting version to be matched with a filtering pattern in the type of filtering information of a receiver indicated by filter_type as well as in the definition version indicated by def_version and in the field ID indicated by FilteringinfoID;
pattern (filtering pattern): filtering pattern to be matched with a filtering pattern in the type of filtering information of a receiver indicated by filter_type as well as in the definition version indicated by def_version, in the field ID indicated by FilteringInfoID, and in the setting version indicated by info_version;
next_schedule (next renewal schedule): list of transmission schedule of a renewal schedule to be transmitted next;
transport_stream_id (transport identification): identification of a transport transmitting a renewal schedule;
original_network_id (original network identification): identification of an original network transmitting a renewal schedule;
service_id (service identification): identification of a service transmitting a renewal schedule;
schedule (schedule): schedule for transmitting a renewal schedule;
start_time (start time): start time transmitting a renewal schedule; and
duration (duration): duration for transmitting a renewal schedule.

First, the receiver stores a renewal schedule when tuned into a channel of program 0. Then, the receiver makes a reservation for storing a next renewal schedule according to "transmission schedule of renewal schedule" described in the received renewal schedule. By successively repeating this procedure, the renewal schedule is obtained completely. Then, the receiver obtains a content according to "transmission schedule of a content" described in the renewal schedule.

Furthermore, a carousel carrying a content and a meta-content always comprises content meta-data. The content meta-data consists of content information and sign information (although no sign information is included for service component information). The content information is classified into common content information describing information of a content group and private content information describing information inherent to each content.

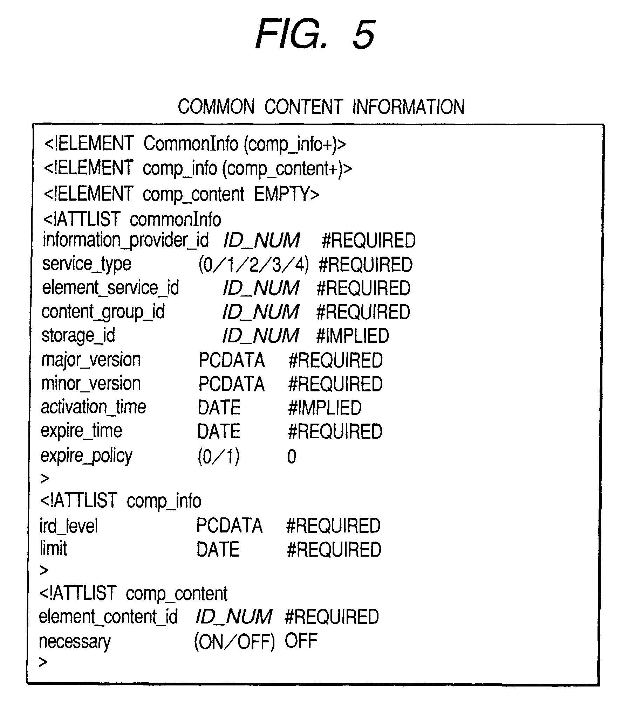

Fig. 5 shows an example of common content information. Each item shown in Fig. 5 has the following meaning.

CommonInfo: common information of content;
information_provider_id: identification of an information provider of a service to which a concerned content belongs to, being set to "0x00" when transmitting service component information;
service_type: service type of a service to which a concerned content belongs to, being set to 2 for the service component information and set to 3 for the renewal of schedule;
element_service_id: element service identification of a service to which a concerned content belongs to, being set to a unique value for each information provider and set to 0 when a renewal schedule is transmitted;
content_group_id: content group identification of a service to which a concerned content belongs to, being set to a unique value for each information provider;
storage_id: identification of a storage area of a concerned content in a receiver, the storage area being set for each information provider;
major_version: major version of content group;
minor_version: minor version of content group;
activation_time (validating time): time indicating validation of a concerned content group;
expire_time (end of effective term): expiration time of a concerned content group;
expire_policy (policy of deletion): policy in the deletion of a concerned content group, being set to "0 (default value)" when the concerned group is deleted upon expiration of the effective term or set to "1" when the presentation to a viewer is guaranteed;
comp_info: component information of a concerned content group;
ird_level (receiver level): receiver level corresponding to a component information of a content;
limit (acquirement time limit); time limit for acquiring a content group;
comp_content (component content): content composing a content group;
element_content_id (content administration ID): content administration identification of a content composing a concerned content group, being set to a unique value for each information provider; and
necessary (necessary flag): flag specifying a compulsory content in a content group, being set to "ON" for each compulsory content and "OFF" for others.

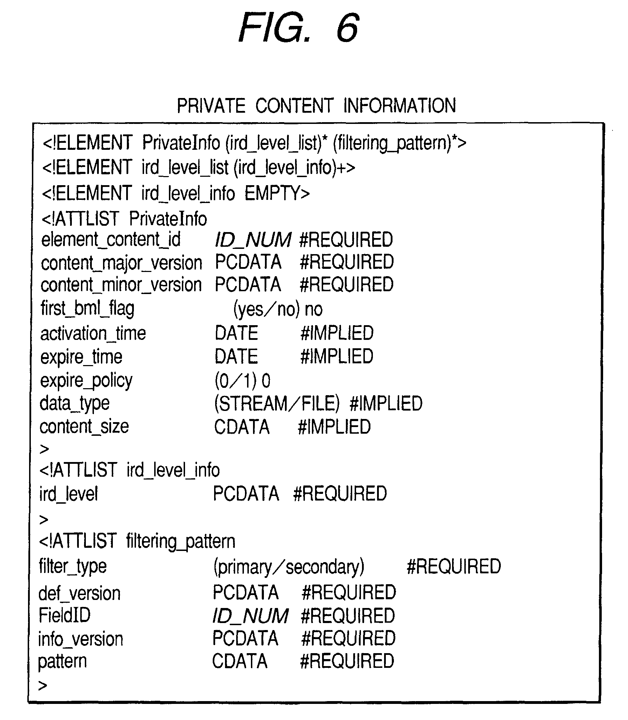

Fig. 6 shows an example of private content information. Each item shown in Fig. 6 has the following meaning.

PrivateInfo: information inherent to each content;
element_content_id (content administration ID): content administration identification of a concerned content, being set to a unique value for each information provider;
content_major_version: major version of a concerned content;
content_minor_version: minor version of a concerned content;
first_bml_flag (entry content flag): flag specifying whether or not a concerned content is an entry content of server based broadcast service to which this content belongs to;
activation_time (validating time): time indicating validation of a concerned content, although not described when the setting of validating time is unnecessary;
expire_time (end of effective term): expiration time of a concerned content, although not described in the private content information when the setting of effective term is unnecessary;
expire_policy (policy of deletion): policy in the deletion of a concerned content;
data_type: data type of a content, being set for a program stream content or a data content;
content_size: size of a content (by the units of byte);
ird_level_list (list of a corresponding receiver level): list of receiver level corresponding to a concerned content, although not described when this content corresponds to all of the receivers;
ird_level_info (level information of a corresponding receiver): information relating to receiver level corresponding to a concerned content;
ird_level (receiver level): receiver level corresponding to a concerned content;
filtering_pattern: filtering pattern attached to a concerned content, although not described when no filtering is performed;
filter_type (type of filtering information): type of filtering information of a receiver to be matched with a filtering pattern;
def_version (definition version of filtering information): definition version to be matched with a filtering pattern in the type of filtering information of a receiver indicated by filter_type;
FieldID (field ID of filtering information): field ID to be matched with a filtering pattern in the type of filtering information of a receiver indicated by filter_type as well as in the definition version indicated by def_version;
info_version (setting version of filtering information): setting version to be matched with a filtering pattern in the type of filtering information of a receiver indicated by filter_type as well as in the definition version indicated by def_version and in the field ID indicated by FieldID; and
pattern (filtering pattern): filtering pattern to be matched with a filtering pattern in the type of filtering information of a receiver indicated by filter_type as well as in the definition version indicated by def_version, in the field ID indicated by FieldID, and in the setting version indicated by info_version.

In this manner, all of the contents composing a content group are designated in the common content information. A content producer produces each content consisting of a content group composing a server based broadcast service. Then, the content producer sets one or more compulsory contents as well as an acquirement time limit, and describes them into the common content information.

The receiver cannot present a content group until all of the compulsory contents. Furthermore, when fails to store all of the compulsory contents by the acquirement time limit being set in the common content information, the receiver cancels storing this content group and deletes all of the contents having been already stored.

One carousel transmits or carries one content. One carousel contains a resource (i.e., a file) of a corresponding content and a resource list representing a file type and a format type. Furthermore, regarding content information, sign information, service component information and renewal schedule, only one resource is included in one carousel.

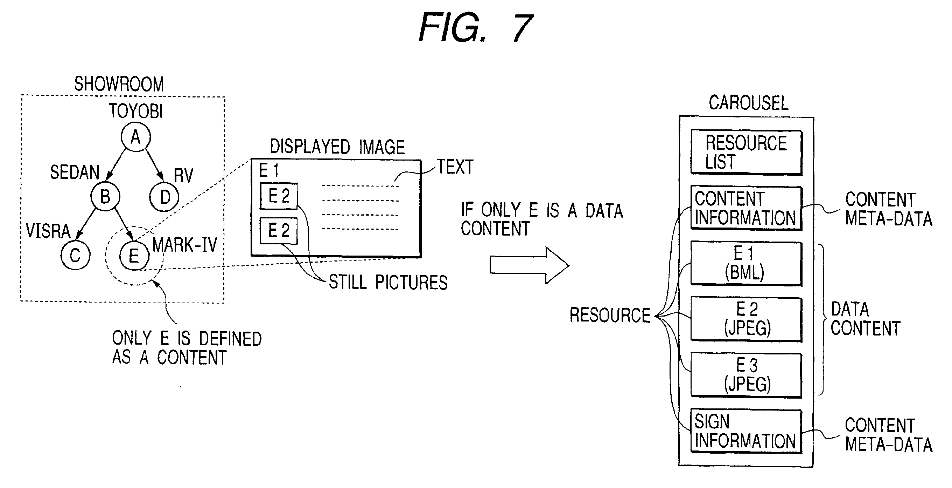

Fig. 7 shows a displayed image of content E, as a data content, constituting a server based broadcast service. Fig. 7 also shows the configuration of a carousel carrying the content E. In this data content, a BML file (E1) refers to still pictures (E2 and E3). A carousel consists of a resource list and a plurality of resources. The resources of content information and sign information constitute a content meta-data. The resources of E1(BML), E2(JPEG) and E3(JPEG) constitute a data content. The description in the resource list is simply expressed like ---resource: "content information", resource: BML, resource: JPEG, resource: JPEG, resource: "sign information"---.

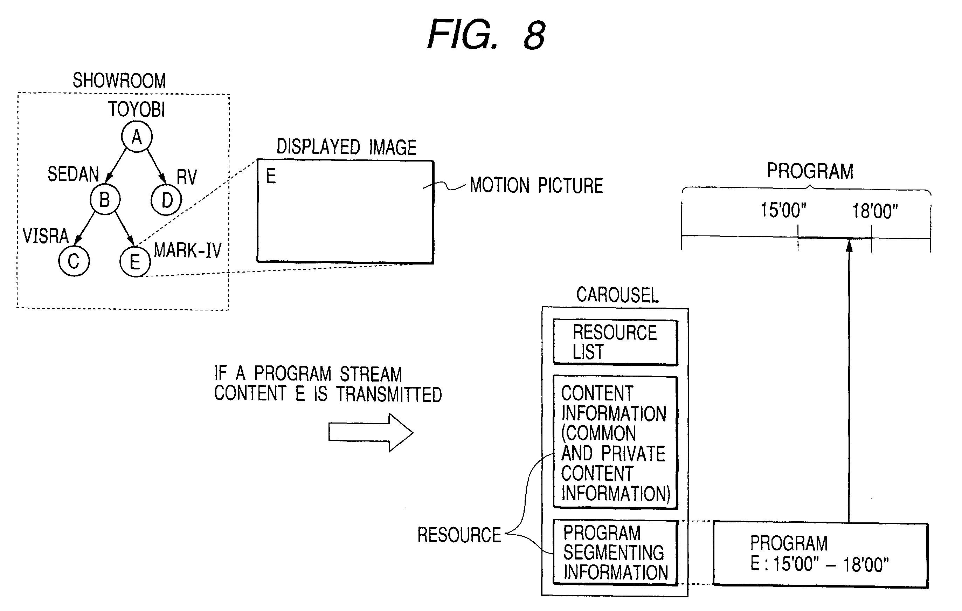

Fig. 8 shows a displayed image of content E, as a program stream content (motion picture), constituting a server based broadcast service as well as structure of a carousel transmitting the content E. The carousel comprises a resource of program stream data expressed by program segmenting information. According to this example, the program stream data designates a motion picture in a time slot from 15'00" to 18'00" of a program to be broadcasted in this time slot. The designated motion picture is stored in a receiver. During playback of content E, the motion picture corresponding to the designated time slot is presented. A plurality of program stream data involved in the program stream content must belong to the same broadcast program.

A meta-content (service component information, renewal schedule) is also carried on a carousel as a content. The common content information is as follows.
When the service component information is transmitted, "information_provider_id" of the common content information is set to 0 and "service_type" is set to 2. Furthermore, when a renewal schedule is transmitted, "information_provider_id" is set to an ID of an objective information provider and "element_service_id" is set to 0.

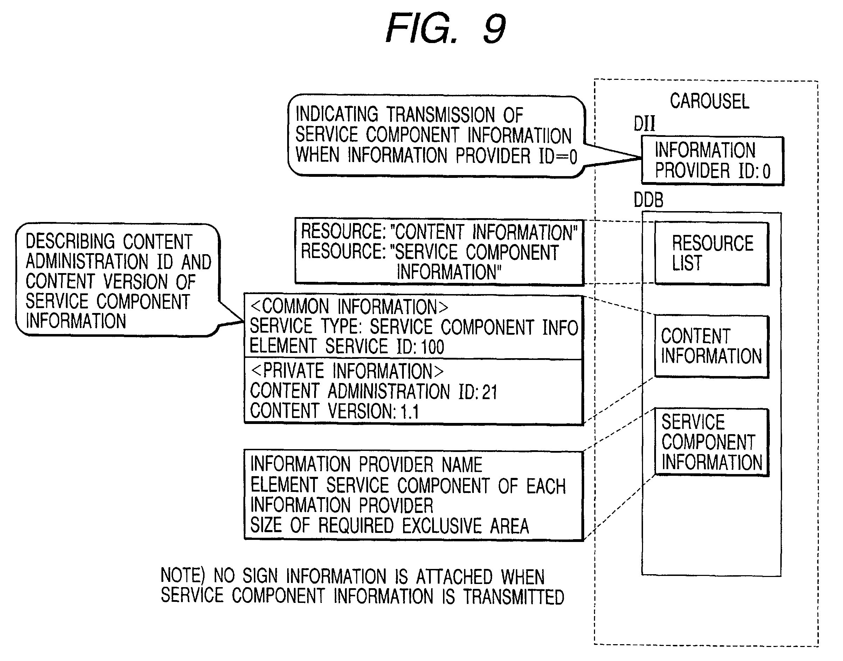

Fig. 9 shows a structure of a carousel for transmitting service component information. One carousel comprises a single resource of service component information and a single resource of content information together with a resource list. DII (downloadInfoIndication) is defined according to a standard ARIB STD-B24. IP_Information descriptor representing information provider information is stored in Model_Info_Byte. Then, a carousel is transmitted.

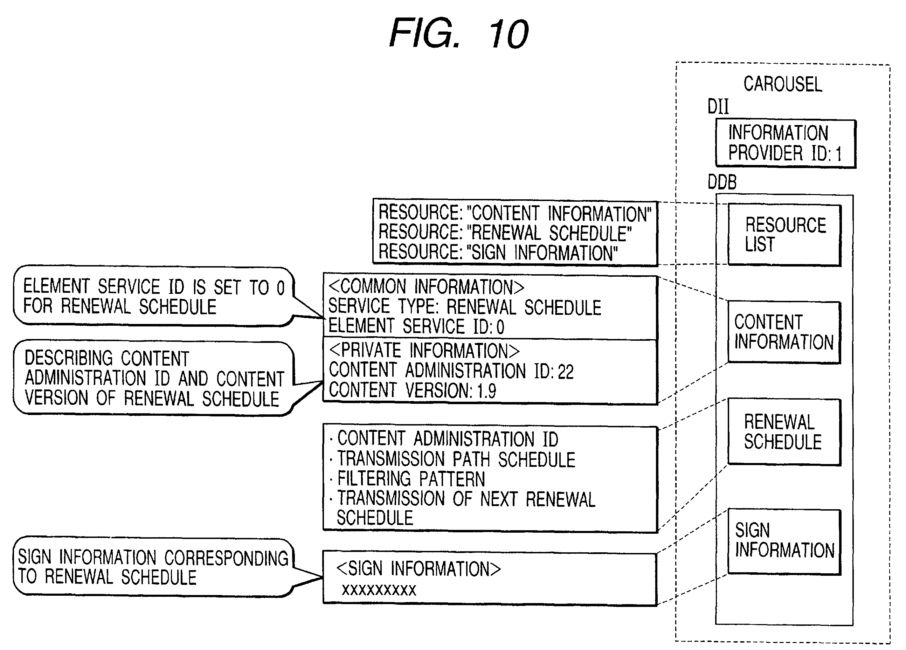

Fig. 10 shows a structure of a carousel for transmitting a renewal schedule. One carousel comprises resources of renewal schedule, content information, and sign information together with a resource list.

In this manner, the above-described server based broadcast system transmits both the service component information and the renewal schedule according to the data carousel transmission method in the same manner as the data contents and program stream contents. Furthermore, like the data contents and program stream contents, the service component information and the renewal schedule can constitute a content group. In this case, a receiver does not present any contents of a designated content group until all of the compulsory necessary contents of this group are completely stored.

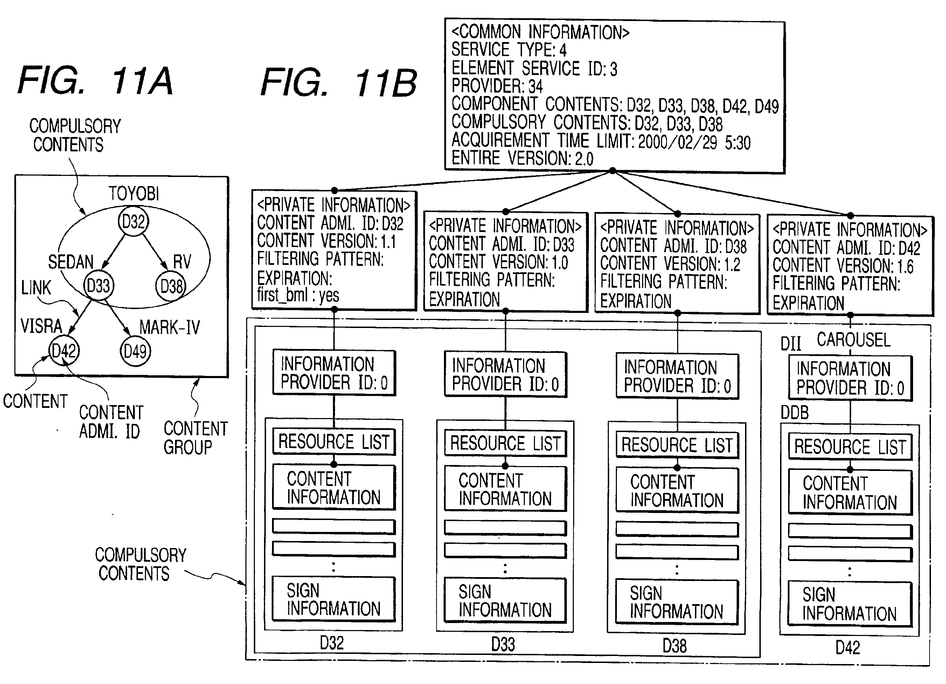

Figs. 11A and 11B show a relationship between component contents and compulsory contents in a content group. Fig. 11A shows the setting of a content group composed of five contents D32, D33, D38, D42, and D49, in which three contents D32, D33 and D38 are set as compulsory contents. Fig. 11B shows the configuration of carousels which transmit the contents of this content group, respectively. The content information of each carousel consists of private information and the same common information. In the common information, all of identifiers D32, D33, D38, D42 and D49 of the contents constituting this content group are described as "component content." Among them, identifiers D32, D33 and D38 are described as "compulsory content." The date/time designated as "acquirement time limit" is 2000/02/29 5:30. The receiver, when fails to receive all of the compulsory contents D32, D33, and D38 by the acquirement time limit, cancels acquiring this content group and abandons all of the contents having been already acquired.

Each carousel contains the private information, in which an identifier of each content is described as an administration ID. The content D32 is first activated in the playback operation. The private information of content D32 includes "first_bml" being set to "yes." Regarding other contents D33, D38, D42, and D49, "first_bml" is set to "no." According to this embodiment, no settings are done for the filtering pattern, the expiration time, and the receiver level.

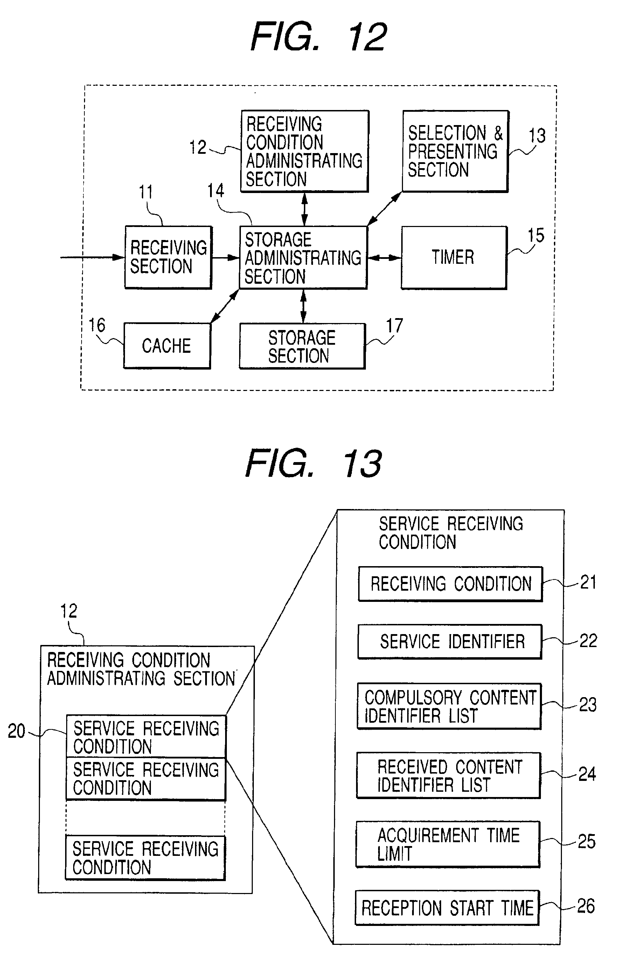

As shown in Fig. 12, the receiver comprises a receiving section 11 which receives broadcasted data, a storage administrating section 14 which administrates the contents composing a server based broadcast service, a receiving condition administrating section 12 which administrates receiving conditions of each content of the server based broadcast service, a cache 16 which temporarily stores the received data, a storage section 17 which stores the contents of the server based broadcast service, a timer 15 serving as a time counter, and a selection and presenting section 13 which selects a content from the storage section 17 and presents a selected content.

First, the receiving section 11 receives a carousel having an information provider ID=0 in DII. The storage administrating section 14 analyzes the common content information of each content received by the receiving section 11 to confirm whether or not the service type is service component information. When the service type of the received content is service component information, the storage administrating section 14 accesses the receiving condition administrating section 12 to transmit the information of compulsory contents described in the common content information as well as a content identifier of each compulsory content described in the private content information. The storage administrating section 14 causes the cache 16 to store compulsory contents. The receiving condition administrating section 12, registering and administrating receiving conditions of contents, creates a compulsory content identifier list and a received content identifier list and registers them. The receiving section 11 successively receives carousels corresponding to information provider ID=0. Regarding the service component information administrated by the receiving condition administrating section 12, the number of registered items in the received content identifier list increases in accordance with this procedure and the number of contents stored in the cache 16 increases.

When all of the contents described in the compulsory content identifier list are registered as having been already received in the received content identifier list, and when all of the compulsory contents are stored in the cache 16, the storage administrating section 14 transfers the received contents from the cache 16 to the storage section 17 and informs the selection and presenting section 13 of effectiveness or validity of service component information.

To allow a user to select a favorable element service, the selection and presenting section 13 presents a list of element services of each information provider on its screen based on this service component information according to a firmware (i.e., microprogram) incorporated in the receiver. When a user selects (or subscribes) any one of the element services, the selection and presenting section 13 transmits an element service of a selected information provider to the storage administrating section 14. The storage administrating section 14 causes the storage section 17 to secure a storage area for storing the contents of an element service based on the service component information.

When an element service to be stored is determined, the receiver stores the contents of a content group composing an element service by using a renewal schedule. The information, when its service type is a renewal schedule, is stored beforehand regardless of subscription of a service of an information provider.

The receiving section 11 receives the contents sent from an information provider to which a user subscribes. The storage administrating section 14 analyzes the common content information of each content received by the receiving section 11 to obtain a service ID (i.e., service identifier). Then, the storage administrating section 14 accesses the receiving condition administrating section 12 to confirm the receiving conditions of a service identified by this service identifier.

As shown in Fig. 13, the receiving condition administrating section 12 registers and administrates service receiving conditions 20 for each service identifier. When a service receiving condition 20 corresponding to a service identifier inquired from the storage administrating section 14 is not registered yet, the receiving condition administrating section 12 newly resistors it. And, a receiving condition 21 is displayed as "now receiving." A service identifier 22, a compulsory content identifier list 23, and an acquirement time limit 25 are respectively set based on the common content information. A reception start time 26 is set based on the data of timer 15. A received content identifier is registered in a received content identifier list 24. After the new registration of a service receiving condition 20 is finished, the storage administrating section 14 causes the cache 16 to store the received content.

In some cases, the service receiving condition 20 corresponding to a concerned service identifier is already registered in the receiving condition administrating section 12. And, its received time has already passed the acquirement time limit 25 (i.e., in a time-out condition). In this case, the identifier of a received content is registered into the received content identifier list 24. And, the received content is not stored in the cache 16.

In another cases, the service receiving condition 20 corresponding to a concerned service identifier may be already registered in the receiving condition administrating section 12. But, its received time may not have passed the acquirement time limit 25. In such a case, the identifier of a received content is registered into the received content identifier list 24, and the received content is stored in the cache 16. In this case, when all of the content identifiers described in the compulsory content identifier list 23 are registered as having been already received in the received content identifier list 24, the storage administrating section 14 transfers the received contents from the cache 16 to the storage section 17 and informs the selection and presenting section 13 of effectiveness or validity of service.

Furthermore, the storage administrating section 14 confirms all of the service receiving conditions 20 administrated by the receiving condition administrating section 12, and deletes the received contents of any service, if in the time-out condition, from the cache 16. And, the storage administrating section 14 deletes the corresponding service receiving conditions 20 from the receiving condition administrating section 12.

In this manner, the content meta-data attached to each content includes both the common content information and the private content information. The receiver, while successively receiving individual contents transmitted according to a data carousel transmission method, can store a content group of contents required for finally enjoying an intended server based broadcast service.

The sign information, composing the content meta-data, allows the receiver to confirm whether or not a received content is sent from an authorized information provider. The receiver analyzes service component information to obtain a public key of an information provider providing an element service to which a user subscribes.

The broadcast station transmits a data content in the following manner.

Step 1: Part of the resources of a data content is extracted to calculate a hash value.

Step 2: Extraction parameters, which indicate the way of extracting the resources in step 1, and a calculated hash value are encoded and enciphered by using a secret key of an information provider. The extraction parameters include the resource numbers, an offset value from the head and a data length of each data extracted from respective resources, and original resource sizes.

Step 3: The enciphered data is added to the data content and transmitted as the sign information.

The receiver receives the data content in the following manner.

Step 1: Both of a data content and a content meta-data (i.e., content information, sign information) are received.

Step 2: The sign information involved in the content meta-data is decoded by using a public key corresponding to an information provider described in the content information.

Step 3: It is then checked whether or not the sizes of respective resources in this data content agree with the resource sizes described as the extraction parameters in the decoded sign information. If they disagree with each other, it is judged as NG.

Step 4: The data involved in the data content are extracted in accordance with the offset value and the data length described in the extraction parameters of the decoded sign information. Then, a hash value is calculated by using a hash function in the receiver.

Step 5: It is then checked whether or not the hash value obtained in step 4 agrees with the hash value in the decoded sign information. If they disagree with each other, it is judged as NG.

Step 6: If the judgement is YES in step 5, the data content is recognized as the one transmitted from the information provider described in the content meta-data.

By performing these authentication steps, it becomes possible to confirm that the content is the one actually transmitted from the information provider. Furthermore, it becomes possible to prevent unintended contents from erroneously stored in a storage area prepared in the storage section 17.

In this manner, according to the server based broadcast system, the content meta-data attached to each content includes both the common content information and the private content information in a separate fashion. The receiver, successively storing individual contents transmitted according to the data carousel transmission method, can store a content group of contents required for finally enjoying an intended server based broadcast service.

The content meta-data is included as a resource in the carousel of data broadcasting and multiplexed together with a main body of broadcast content such as a BML document. When the meta-data is transmitted as service information (SI), data processing and data administration at each of the producer side and the receiver side become easy.

According to this embodiment, contents composing a content group can be renewed in the following manner.

When it is necessary to change any content or add a new content composing a content group, the content to be changed or added is designated as a compulsory content in the common content information of a content meta-data attached to the content to be changed or added. This content is transmitted according to the data carousel transmission method.

The receiver, when received a content having the same service identifier and the same content identifier as those of an already stored content, replaces the already stored content by a newly received content. Furthermore, when received a content having the same service identifier as that of an already stored content but having a new content identifier, the receiver adds a newly received content in a content group of a related server based broadcast service.

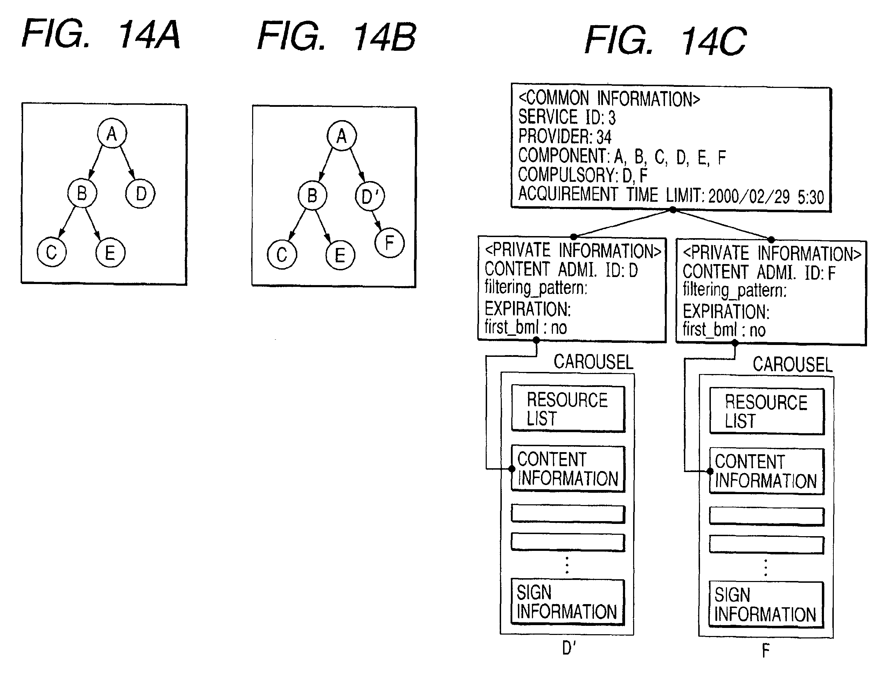

For example, the configuration of a server based broadcast service shown in Fig. 14A may be modified to include a new content F as shown in Fig. 14B. In this case, the content D is modified to a content D' so as to link with a newly added content F. To realize this renewal, the broadcast station transmits carousels carrying the content F and the content D' (having the same content identifier as that of content D), respectively.

In this case, content identifiers of contents A, B, C, D', E and F are set as component contents in the common content information included in each carousel.
The content identifiers of modified or added contents D' and F are set as compulsory contents.

According to the receiver having the configuration shown in Fig. 12, the receiving section 11 receives the contents of server based broadcast service carried on carousels. The storage administrating section 14 analyzes the content information of each content received by the receiving section 11 to obtain a service ID. Then, the storage administrating section 14 accesses the receiving condition administrating section 12 to confirm the receiving conditions of a service identified by this service identifier.

When a service receiving condition 20 corresponding to a service identifier inquired from the storage administrating section 14 is not registered yet, the receiving condition administrating section 12 newly resistors it and sets a compulsory content list based on the data of common information. A received content identifier is registered in a received content identifier list 24. Then, the storage administrating section 14 causes the cache 16 to store the received content.

The service receiving condition 20 corresponding to a concerned service identifier may be already registered in the receiving condition administrating section 12. And, its received time may have already passed the acquirement time limit 25 (i.e., in a time-out condition). In this case, the identifier of a received content is registered into the received content identifier list 24. And, the received content is not stored in the cache 16.

In another cases, the service receiving condition 20 corresponding to a concerned service identifier may be already registered in the receiving condition administrating section 12. But, its received time may not have passed the acquirement time limit 25. In such a case, the identifier of a received content is registered into the received content identifier list 24, and the received content is stored in the cache 16. In this case, when all of the content identifiers described in the compulsory content identifier list 23 are registered as having been already received in the received content identifier list 24, the storage administrating section 14 transfers the received contents from the cache 16 to the storage section 17. If a content having the same content identifier is already stored in the storage section 17, the already stored content is replaced by a newly received content. Furthermore, the storage administrating section 14 informs the selection and presenting section 13 of renewal of service.

As described above, the renewal of contents composing an element service can be performed according to the procedure similar to that of the transmission of an ordinary content. Furthermore, the renewal of service component information can be performed in the same manner. Even when the number of information providers of services increases, the service component information for each information provider can be easily added.

In this manner, according to a server based broadcast system, it is possible to make a group of contents. As a result, it becomes possible to provide a variety of attractive services.

Furthermore, the information necessary to operate the system, such as service component information and renewal schedule, can be transmitted according to the data carousel transmission method used for data broadcasting in the same manner as the contents of provided information. Processing required in each of the transmitter side and the receiver side becomes simple. The push-type information providing operation can be effectively performed.

As the contents and meta-contents can be repetitively transmitted according to the data carousel transmission method, the receiver can surely receive the contents and meta-contents without failure.

Furthermore, in the common content information or the private content information attached to a content or a meta-content, it is possible to set the expiration time for each content or for each content group. Thus, the receiver can delete a stored content when its expiration time has passed so that unnecessary information can be abandoned.

Furthermore, in the private content information, the information relating to filtering can be put to each content or to each meta-content. Each receiver can store only the contents matching with the filtering information being set in this receiver. As a result, efficiency of data storage in the receiver can be improved. Furthermore, it becomes possible to provide information service suitable for each receiver.

As apparent from the foregoing description, a server based broadcast system of the present invention can transmit the information necessary to operate the system, such as service component information and renewal schedule, according to the data carousel transmission method used for data broadcasting in the same manner as the contents of service information. Thus, the present information can realize an effective push-type information providing system.

Furthermore, a server based broadcast system of the present invention can easily renew the contents or meta-contents without any special mechanism. Thus, it becomes possible to promptly update the system in accordance with the increase of information providers of services.

Furthermore, according to a server based broadcast system of the present invention, a public key of an information provider is transmitted in the service component information transmitted by a meta-content. Thus, by using this public key only, it becomes possible to perform the authentication processing of a content to which a digital sign of an information provider is attached.

Furthermore, the present invention makes it possible to set an expiration time or to perform a filtering for each content or each meta-content composing a server based broadcast service. Thus, it becomes possible to improve a storage efficiency in each receiver, and it becomes possible to arrange a server based broadcast service suitable for each receiver.

Next, according to the present invention, the configuration of a server based broadcast service can be modified according to a storage capacity of each receiver.

It is assumed, as shown in Fig. 15A, that a server based broadcast service is composed of a group of A, B, C, D and E. When the size of each content is 1L, a storage capacity required for each receiver to store all of the contents of this server based broadcast service is 5L. However, if a minimum level of broadcast service is available at the time three contents of A, B and D are stored, it will be possible to provide a minimum level of broadcast service to a receiver having a storage size of 3L (i.e., level Y) while providing a complete broadcast service shown in Fig. 15A to a receiver having a storage size of 5L (i.e., level X). This leads to expansion of a broadcast service area. In Fig. 15B, a content B' differs from the content B only in having no linkage to the contents C and E.

Modifying the configuration of a server based broadcast service according to each receiver level is realized by setting an adequate data to the private content information "ird_level (receiver level)" of the content information explained above.

As shown in Fig. 15C, the receiver level is set to the private information of each content. The receiver level represents the allowance of storage of a concerned content.

More specifically, when the server based broadcast service shown in Figs. 15A and 15B are provided, the receiver levels of respective contents are set in the following manner.
Receiver level of content A: X, Y
Receiver level of content B: X
Receiver level of content B': Y
Receiver level of content C: X
Receiver level of content D: X, Y
Receiver level of content E: X

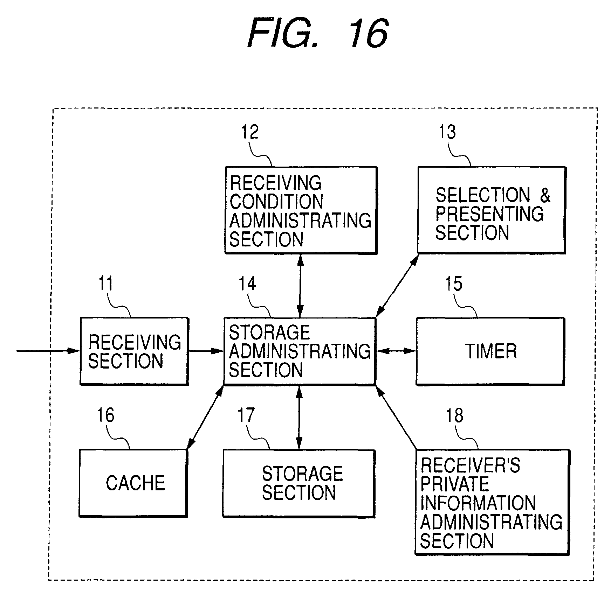

As shown in Fig. 16, the receiver is slightly modified to comprise a receiver's private information administrating section 18 for administrating the level information of this receiver. The rest of the receiver is identical with that shown in Fig. 12.

According to this receiver, when the receiving section 11 receives a content of a server based broadcast service carried on a carousel, the storage administrating section 14 analyzes the content information of the received content and compares each receiver level contained in its private information with a receiver level of this receiver. The receiver's private information administrating section 18 administrates the receiver level of this receiver. When any of the receiver levels contained in the private information agrees with the receiver level of this receiver, the receiving condition of a service is confirmed as described above. The receiving condition administrating section 12 administrates the receiving condition of the service. Then, the succeeding operations are executed.

When none of the receiver levels contained in the private information agrees with the receiver level of this receiver, the receiving operation of this content is stopped.

As a result, each receiver having a storage size of 5L stores all of the contents A, B, C, D and E and therefore can present a complete server based broadcast service shown in Fig. 15A. On the other hand, each receiver having a storage size of 3L stores only three contents A, B' and D and therefore can present a minimum level of server based broadcast service shown in Fig. 15B.

In this manner, by setting the receiver level information the private content information of the content meta-data, it becomes possible to control the storage of contents in a receiver according to its storage capacity.

As apparent from the foregoing description, the present invention provides a server based broadcast system which enables each receiver to store a group of contents and makes it possible to provide a variety of interesting server base broadcast services.

Furthermore, according to the present invention, renewal of the contents is easy and therefore the stored contents can be promptly updated to brand-new information.

Furthermore, the present invention makes it possible to provide a service according to a receiver level.

## Claims

1. A server based broadcast system for transmitting and receiving a data via a transmission path (300), said server based broadcast system comprising a data transmitting device (100) and a receiving terminal (200), wherein
said data transmitting device (100) comprising:
a content storing section (101) for storing and administrating contents to be transmitted;
a content correlation processing section (102) for correlating the contents with each other based on a user's instruction;
a content appendix information generating section (103), communicating with said content correlation processing section (102), for generating private content information as appendix information inherent to each content as well as common content information as appendix information common to a plurality of contents; and
a content meta-data generating section (104) for producing a meta-data relating to a content based on said private content information and said common content information produced by said content appendix information generating section (103), and
said receiving terminal (200) comprises:
a common content information extracting section (201) for receiving said content meta-data produced from said data transmitting device (100) and for extracting said common content information involved in the received content meta-data;
a content grouping section (202) for making a content group consisting of a plurality of contents received from said data transmitting device (100) according to said common content information extracted by said common content information extracting section (201); and
a content administrating section (203) for storing and administrating the contents belonging to the same content group.

2. A server based broadcast system for transmitting and receiving a data via a transmission path (300), said server based broadcast system comprising a data transmitting device (100) and a receiving terminal (200), wherein
said data transmitting device (100) comprising:
a content storing section (101) for storing and administrating contents to be transmitted;
a content correlation processing section (102) for analyzing a correlation between the contents stored in said content storing section (101) and performing related processing according to an analysis result;
a content appendix information generating section (103), communicating with said content correlation processing section (102), for generating private content information as appendix information inherent to each content as well as common content information as appendix information common to a plurality of contents; and
a content meta-data generating section (104) for producing a meta-data relating to a content based on said private content information and said common content information produced by said content appendix information generating section (103), and
said receiving terminal (200) comprises:
a common content information extracting section (201) for receiving said content meta-data produced from said data transmitting device (100) and for extracting said common content information involved in the received content meta-data;
a content grouping section (202) for making a content group consisting of a plurality of contents received from said data transmitting device (100) according to said common content information extracted by said common content information extracting section (201); and
a content administrating section (203) for storing and administrating the contents belonging to the same content group.

3. The server based broadcast system in accordance with claim 1 or 2, wherein said common content information comprises compulsory information as a data required when said receiving terminal (200) provides a content service to a user.

4. A data transmitting device (100) used in a server based broadcast system for transmitting a data via a transmission path (300), comprising:
a content storing section (101) for storing and administrating contents to be transmitted;
a content correlation processing section (102) for correlating the contents with each other based on a user's instruction;
a content appendix information generating section (103), communicating with said content correlation processing section (102), for generating private content information as appendix information inherent to each content as well as common content information as appendix information common to a plurality of contents; and
a content meta-data generating section (104) for producing a meta-data relating to a content based on said private content information and said common content information produced by said content appendix information generating section (103).

5. A data transmitting device (100) used in a server based broadcast system for transmitting a data via a transmission path (300), comprising:
a content storing section (101) for storing and administrating contents to be transmitted;
a content correlation processing section (102) for analyzing a correlation between the contents stored in said content storing section (101) and performing related processing according to an analysis result;
a content appendix information generating section (103), communicating with said content correlation processing section (102), for generating private content information as appendix information inherent to each content as well as common content information as appendix information common to a plurality of contents; and
a content meta-data generating section (104) for producing a meta-data relating to a contend based on said private content information and said common content information produced by said content appendix information generating section (103).

6. The data transmitting device in accordance with claim 4 or 5, wherein said common content information comprises compulsory information as a data required when a receiving terminal (200) associated with said data transmitting device provides a content service to a user.

7. A receiving terminal (200) used in a server based broadcast system for receiving a data via a transmission path (300), comprising:
a common content information extracting section (201) for receiving a content meta-data produced from a data transmitting device (100) and for extracting common content information involved in the received content meta-data;
a content grouping section (202) for making a content group consisting of a plurality of contents received from said data transmitting device (100) according to said common content information extracted by said common content information extracting section (201); and
a content administrating section (203) for storing and administrating the contents belonging to the same content group.

8. A method for transmitting and receiving a data via a transmission path based on a server based broadcast system, comprising:
a step (SA1) of storing and administrating contents to be transmitted when a data is transmitted;
a step (SA2) of analyzing a correlation between the contents;
a step (SA3) of performing related processing according to an analysis result;
a step (SA4) of generating private content information as appendix information inherent to each content as well as common content information as appendix information common to a plurality of contents;
a step (SA5) of producing a content meta-data as a meta-data relating to a content based on said private content information and said common content information;
a step (SB1) of receiving said content meta-data when said data is received;
a step (SB2) of extracting said common content information involved in the received content meta-data;
a step (SB3) of making a content group consisting of a plurality of received contents according to said common content information; and
a step (SB4) of storing and administrating the contents belonging to the same content group.

9. A recording medium storing a software program for transmitting and receiving a data via a transmission path based on a server based broadcast system, comprising:
a step (SA1) of storing and administrating contents to be transmitted when , a data is transmitted;
a step (SA2) of analyzing a correlation between the contents;
a step (SA3) of performing related processing according to an analysis result;
a step (SA4) of generating private content information as appendix information inherent to each content as well as common content information as appendix information common to a plurality of contents;
a step (SA5) of producing a content meta-data as a meta-data relating to a content based on said private content information and said common content information;
a step (SB1) of receiving said content meta-data when said data is received;
a step (SB2) of extracting said common content information involved in the received content meta-data;
a step (SB3) of making a content group consisting of a plurality of received contents according to said common content information; and
a step (SB4) of storing and administrating the contents belonging to the same content group.

10. A software program of a computer for transmitting and receiving a data via a transmission path based on a server based broadcast system, said software program comprising:
a step (SA1) of storing and administrating contents to be transmitted when a data is transmitted;
a step (SA2) of analyzing a correlation between the contents;
a step (SA3) of performing related processing according to an analysis result;
a step (SA4) of generating private content information as appendix information inherent to each content as well as common content information as appendix information common to a plurality of contents;
a step (SA5) of producing a content meta-data as a meta-data relating to a content based on said private content information and said common content information;
a step (SB1) of receiving said content meta-data when said data is received;
a step (SB2) of extracting said common content information involved in the received content meta-data;
a step (SB3) of making a content group consisting of a plurality of received contents according to said common content information; and
a step (SB4) of storing and administrating the contents belonging to the same content group.

11. A method for transmitting a data via a transmission path based on a server based broadcast system, comprising:
a step (SA1) of storing and administrating contents to be transmitted when a data is transmitted;
a step (SA2) of analyzing a correlation between the contents;
a step (SA3) of performing related processing according to an analysis result;
a step (SA4) of generating private content information as appendix information inherent to each content as well as common content information as appendix information common to a plurality of contents; and
a step (SA5) of producing a content meta-data as a meta-data relating to a content based on said private content information and said common content information.

12. A recording medium for storing a software program for transmitting a data via a transmission path based on a server based broadcast system, comprising:
a step (SA1) of storing and administrating contents to be transmitted when a data is transmitted;
a step (SA2) of analyzing a correlation between the contents;
a step (SA3) of performing related processing according to an analysis result;
a step (SA4) of generating private content information as appendix information inherent to each content as well as common content information as appendix information common to a plurality of contents; and
a step (SA5) of producing a content meta-data as a meta-data relating to a content based on said private content information and said common content information.

13. A software program of a computer for transmitting a data via a transmission path based on a server based broadcast system, said software program comprising:
a step (SA1) of storing and administrating contents to be transmitted when a data is transmitted;
a step (SA2) of analyzing a correlation between the contents;
a step (SA3) of performing related processing according to an analysis result;
a step (SA4) of generating private content information as appendix information inherent to each content as well as common content information as appendix information common to a plurality of contents; and
a step (SA5) of producing a content meta-data as a meta-data relating to a content based on said private content information and said common content information.

14. A method for receiving a data via a transmission path based on a server based broadcast system, comprising:
a step (SB1) of receiving a content meta-data when a data is received;
a step (SB2) of extracting common content information involved in the received content meta-data;
a step (SB3) of making a content group consisting of a plurality of received contents according to said common content information; and
a step (SB4) of storing and administrating the contents belonging to the same content group.

15. A recording medium storing a software program for receiving a data via a transmission path based on a server based broadcast system, comprising:
a step (SB1) of receiving a content meta-data when a data is received;
a step (SB2) of extracting common content information involved in the received content meta-data;
a step (SB3) of making a content group consisting of a plurality of received contents according to said common content information; and
a step (SB4) of storing and administrating the contents belonging to the same content group.

16. A software program of a computer for receiving a data via a transmission path based on a server based broadcast system, said software program comprising:
a step (SB1) of receiving a content meta-data when a data is received;
a step (SB2) of extracting common content information involved in the received content meta-data;
a step (SB3) of making a content group consisting of a plurality of received contents according to said common content information; and
a step (SB4) of storing and administrating the contents belonging to the same content group.

17. A server based broadcast system comprising a receiver capable of automatically storing broadcasted contents and allowing a user to enjoy playback of an intended service element involved in the stored contents,
**characterized in that**
a meta-data is added to each content to be broadcasted, said meta-data comprising private information inherent to said each content as well as common information applicable to a plurality of contents, and
said receiver makes a group of contents having the same common information involved in the meta-data attach thereto.

18. The server based broadcast system in accordance with claim 17, wherein said common information includes information designating all of the contents whose meta-data have the same common information.

19. The server based broadcast system in accordance with claim 17 or claim 18, wherein said common information includes information designating compulsory contents selected from the contents whose meta-data have the same common information, and playback of a group of stored contents is feasible only when said receiver has stored all of said compulsory contents.

20. The server based broadcast system in accordance with claim 17, wherein said private information includes information designating a receiver level, while said receiver checks said private information of a received content according to said meta-data attached thereto and stores said received content only when said private information of the received content designates its own receiver level.

21. The server based broadcast system in accordance with claim 17, wherein said meta-data is multiplexed with a content and carried on a carousel for data broadcasting.

22. The server based broadcast system in accordance with claim 17, wherein said receiver renews an already stored content by a newly received content when the private information of a meta-data attached to said newly received content has the same content identifying information as that of said already stored content.

23. The server based broadcast system in accordance with claim 19, wherein said common information includes an acquirement time limit of said compulsory contents, while said receiver cancels storing the contents whose meta-data have the same common information as that of said compulsory contents when fails to acquire all of said compulsory contents by said acquirement time limit.

24. The server based broadcast system in accordance with claim 17, wherein said common information or said private information includes expiration time information, while said receiver deletes a stored content when its expiration time has passed.

25. The server based broadcast system in accordance with claim 17, wherein said common information includes a filtering pattern, while said receiver checks said common information of the meta-data attached to a received content and stores the received content only when a filtering pattern of said received content agrees with a filtering pattern kept in said receiver.

26. The server based broadcast system in accordance with claim 17, wherein said meta-data includes digital sign information of a service provider, while said receiver checks the digital sign information of a received content and stores said received content only when the digital sign information represents an authenticated information provider.

27. A server based broadcast system comprising a receiver capable of automatically storing broadcasted contents and allowing a user to enjoy playback of an intended service element involved in the stored contents,
**characterized in that**
information necessary to operate said server based broadcast system is transmitted as a meta-content equivalent to a content composing the substance of said server based broadcast service.

28. The server based broadcast system in accordance with claim 27, wherein said content and said meta-content are carried on a data carousel for data broadcasting.

29. The server based broadcast system in accordance with claim 27 or claim 28, wherein said meta-content is used to transmit service component information including information relating to said content as well as information relating to a hierarchical structure of a server based broadcast service provided by a service provider.

30. The server based broadcast system in accordance with any one of claims 27 to 29, wherein said meta-content is used to transmit information relating to renewal of said content.

31. The server based broadcast system in accordance with any one of claims 27 to 30, wherein each of said content and said meta-content links with other content or meta-content to compose a content group, and each of said content and said meta-content composing said content group is presented only when a predetermined number of contents or meta-contents of said content group have been stored in said receiver.

32. The server based broadcast system in accordance with claim 31, wherein said receiver displays a screen inquiring whether or not a user utilizes a service, and said receiver controls reception of said content based on a service selected by the user.

33. The server based broadcast system in accordance with claim 32, wherein said receiver acquires information relating to a required storage capacity of information based on said service component information corresponding to the selected service, and secures said required storage capacity.

34. The server based broadcast system in accordance with claim 32, wherein said receiver acquires information relating to a public key based on said service component information corresponding to the selected service, and uses said public key for authentication.

35. The server based broadcast system in accordance with claim 31, wherein a meta-data is attached to said meta-content, said meta-data comprises private information inherent to said meta-content and common information applicable to a plurality of meta-contents composing said content group.

36. The server based broadcast system in accordance with claim 35, wherein said meta-data attached to said meta-content of said service component information includes said private information or said common information describing expiration time information.

37. The server based broadcast system in accordance with claim 35, wherein said meta-data attached to said meta-content of said service component information includes said private information describing filtering information.

38. A method for transmitting a data of a server based broadcast system, comprising the steps of:
producing a meta-data comprising private information inherent to said each content as well as common information applicable to a plurality of contents; and
broadcasting said meta-data together contents composing a server based broadcast service.

39. A method for transmitting a data of a server based broadcast system, comprising the steps of:
transmitting information necessary to operate said server based broadcast system as a meta-content equivalent to a content composing a substance of a server based broadcast service; and
broadcasting said meta-content together with said content composing the substance of a server based broadcast service.

40. A method for receiving a data of a server based broadcast system, comprising the steps of:
automatically storing broadcasted contents; and
allowing a user to enjoy playback of an intended service element involved in the stored contents with reference to private information inherent to each content as well as common information applicable to a plurality of contents.

41. A method for receiving a data of a server based broadcast system, comprising the steps of:
automatically storing information necessary to operate said server based broadcast system as a meta-content equivalent to a content composing a substance of a server based broadcast service; and
allowing a user to enjoy playback of an intended service element involved in the stored contents with reference to said meta-content.

42. A receiver used for a server based broadcast system, comprising:
a receiving section (11) for receiving broadcasted data;
a storage administrating section (14) for administrating the contents composing a server based broadcast service based on common content information and private content information attached to each content of the server based broadcast service;
a receiving condition administrating section (12) for administrating receiving conditions of each content of the server based broadcast service;
a storage section (17) for storing the contents of the server based broadcast service; and
a selection and presenting section (13) for selecting a content from the storage section (17) and presenting a selected content.

43. The receiver used for a server based broadcast system in accordance with claim 42, wherein said receiving section (11) receives a carousel having an information provider identification.

44. The receiver used for a server based broadcast system in accordance with claim 42, wherein said storage administrating section (14) analyzes said common content information of each content received by said receiving section (11) to confirm whether or not a service type is service component information.

45. The receiver used for a server based broadcast system in accordance with claim 44, wherein said common content information describes compulsory contents and said private content information describes a content identifier of each compulsory content, and said storage administrating section (14) transmits the information of said compulsory contents as well as said content identifier of each compulsory content to said receiving condition administrating section (12) when the service type of a received content is service component information.

46. The receiver used for a server based broadcast system in accordance with claim 45, wherein said storage administrating section (14) causes a cache (16) to temporarily store said compulsory contents.

47. The receiver used for a server based broadcast system in accordance with claim 45, wherein said receiving condition administrating section (12) creates a compulsory content identifier list and a received content identifier list based on said common content information.

48. The receiver used for a server based broadcast system in accordance with claim 47, wherein said storage administrating section (14) transfers the received contents from said cache (16) to said storage section (17) and informs said selection and presenting section (13) of effectiveness or validity of service component information when all of the contents described in said compulsory content identifier list are registered as having been already received in the received content identifier list, and when all of the compulsory contents are stored in said cache (16).

49. The receiver used for a server based broadcast system in accordance with claim 42, wherein said selection and presenting section (13) presents a list of element services of each information provider on its screen to allow a user to select a favorable element service.

50. The receiver used for a server based broadcast system in accordance with claim 49, wherein said storage administrating section (14) causes said storage section (17) to secure a storage area for storing the contents of selected element service based on service component information described in said common content information.

51. The receiver used for a server based broadcast system in accordance with claim 42, wherein said storage administrating section (14) analyzes said common content information of each content of an information provider received by said receiving section (11) to obtain a service identifier described in said common content information.

52. The receiver used for a server based broadcast system in accordance with claim 51, wherein said storage administrating section (14) accesses said receiving condition administrating section (12) to confirm the receiving conditions of a service identified by said service identifier.

53. The receiver used for a server based broadcast system in accordance with claim 51, wherein said common content information includes acquirement time limit of a service identified by said service identifier.

54. The receiver used for a server based broadcast system in accordance with claim 53, wherein storage of the contents of said service is canceled when all of the compulsory contents are not stored by said acquirement time limit.

55. The receiver used for a server based broadcast system in accordance with claim 53, wherein said storage administrating section (14) deletes already received contents from said cache (16) and deletes corresponding service receiving conditions (20) from said receiving condition administrating section (12) when all of the compulsory contents are not stored by said acquirement time limit.

56. The receiver used for a server based broadcast system in accordance with claim 42, further comprising a receiver's private information administrating section (18) for administrating level information of said receiver, wherein
said storage administrating section (14) compares each receiver level contained in the private information of a received content with the level information of said receiver, and
said received content is stored in said storage section (17) only when any one of receiver levels contained in said private information agrees with the level information of said receiver.
